# EUROPEAN PATENT SPECIFICATION

(11) **EP 2 665 311 B1**
(45) Date of publication and mention of the grant of the patent: **09.09.2015**
(21) Application number: 11854539.1
(22) Date of filing: 13.07.2011
(51) Int. Cl.: H04W 52/00, H04W 52/02, H04W 72/04

(54) **CONTROL METHOD AND APPARATUS FOR MULTI-CARRIER FREQUENCY POWER AMPLIFIER RESOURCES**
STEUERVERFAHREN UND VORRICHTUNG FÜR MULTITRÄGER-FREQUENZEISTUNGSVERSTÄRKERRESSOURCEN
PROCÉDÉ DE COMMANDE ET APPAREIL DE GESTION DES RESSOURCES D'UN AMPLIFICATEUR DE PUISSANCE À FRÉQUENCE MULTI-PORTEUSE

(43) Date of publication of application: 20.11.2013
(73) Proprietor: Huawei Technologies Co., Ltd., Longgang District Shenzhen, Guangdong 518129 (CN)
(72) Inventor: GENG, Tingting, Shenzhen Guangdong 518129 (CN); ZHANG, Shunqing, Shenzhen Guangdong 518129 (CN); ZHANG, Wei, Shenzhen Guangdong 518129 (CN); XU, Shugong, Shenzhen Guangdong 518129 (CN)
(74) Representative: Körber, Martin Hans
(86) International application number: PCT/CN2011/077104
(87) International publication number: WO 2012/159327

(56) References cited:
- CN-A- 101 103 571
- CN-A- 101 924 627
- US-A1- 2004 047 309
- US-A1- 2004 208 139
- US-A1- 2011 159 903

## Description

### FIELD OF THE INVENTION

The present invention relates to the field of communications technology, and in particular, to a method and device for controlling multi-carrier frequency power amplifier resources.

### BACKGROUND OF THE INVENTION

After more than twenty years development of the wireless communications network, a huge number of devices are running on the network, the network scale is increasing in a rapid speed, and the proportion of large configuration station type becomes larger and larger. Along with the development of the technologies, the multi-carrier technology has been widely applied in GSM (Global System of Mobile communication, global system of mobile communication system) and WCDMA (Wideband Code Division Multiple Address, wideband code division multiple address).

A conventional remote radio unit (RRU) is an important form of a base station device in the wireless communications system, and generally includes a power amplifier unit and a radio frequency small signal processing unit, where the power amplifier unit is generally designed in a manner of multi-carrier power amplifier. Specifically, the multi-carrier power amplifier refers to a power amplifier capable of bearing multiple carrier frequency bands in the same wireless system or multiple types of wireless systems. The multi-carrier power amplifier includes the following main features: multiple carriers may be supported to perform air interface transmission at the same time, thereby implementing power sharing among the multiple carriers; under the limit of maximum transmission power of the power amplifier, generally speaking, more carriers result in lower configurable maximum transmission power of each carrier; and the multi-carrier power amplifier is generally designed in a manner of bandwidth power amplifier, that is, being capable of implementing the amplification of power on a large frequency band.

In the multi-carrier power amplifier, a power amplifier tube is a main apparatus for transmitting power to an antenna feeder in a carrier frequency, and the power consumption thereof includes a static part and a dynamic part. Due to the limitation of a non-linear feature of the power amplifier, a fixed bias voltage needs to be applied to the power amplifier even if it does not transmit the power, so that the power amplifier works in a linear area and is ready to transmit the power at any time, and this part of consumed power consumption is referred to as the static power consumption. The power consumption of the power amplifier further includes the other part of power consumption, that is, the dynamic power consumption. The dynamic power consumption depends on whether a time slot is occupied, and if a call exists on the time slot, the power amplifier must perform the power transmission, at this time, the part increased relative to the static power consumption is the dynamic power consumption, and higher carrier frequency output power results in higher dynamic power consumption; and if no call exists, the dynamic power consumption of the power amplifier is 0, and only the static power consumption exists.

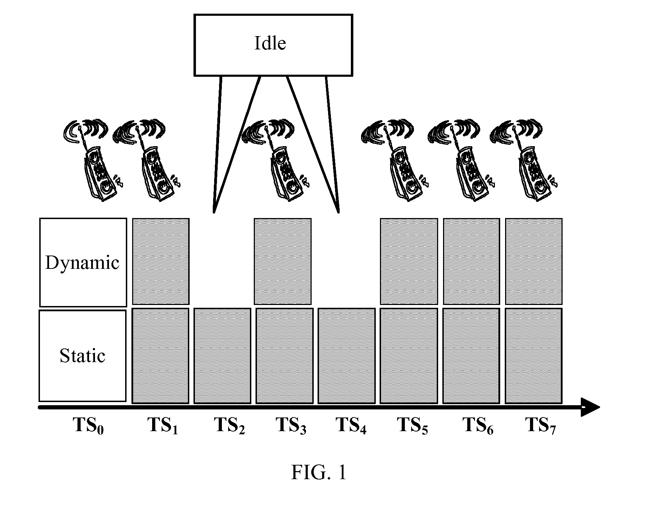

As shown in FIG. 1, the energy consumption situation of a power amplifier tube in seven time slots TS1 to TS7 is shown, where when the power amplifier tube is in the time slot of working state, the energy consumption is the dynamic energy consumption and the static energy consumption, when the power amplifier tube is in the time slot of idle state, the power amplifier tube still has the static energy consumption, that is, the dynamic power consumption is 0, and when the power amplifier is further turned off to eliminate the static power consumption, the overall power consumption of the power amplifier is 0.

In a communications system, according to the number of configured carriers, the power amplifier may be classified into a single-carrier power amplifier and a multi-carrier power amplifier. The single-carrier power amplifier refers to that the power amplifier is only configured with one carrier, and the multi-carrier power amplifier refers to that one power amplifier is configured with 2 or more carriers. When a communications system is configured with multiple multi-carrier power amplifiers, generally, the power amplifiers may be divided into a primary carrier frequency board and a secondary carrier frequency board; a part of resource blocks on the primary carrier frequency board are used to send control signaling of the system, and the rest resource blocks are used to send services; and resource blocks on the secondary carrier frequency board are only used to send services.

The power control mechanism of the conventional power amplifier is that, in a time period (such as a time slot) without a call, that is, when a processing resource module or channel resource of the power amplifier is in the idle state and the dynamic power consumption is 0, the power amplifier is further turned off in this time period, and the static power consumption and the overall power consumption of the power amplifier after the turn-off are all 0.

However, the conventional power amplifier power control technology of time slot turn-off is only applicable to the single carrier, and for the multi-carrier power amplifier, only when all the carriers of the power amplifier are in the idle state in a certain time slot, can the power amplifier perform the time slot turn-off. The multi-carrier power amplifier has multiple carrier frequencies, and therefore, the probability that all carriers of the multi-carrier frequency power amplifier are in the idle state in a certain specific time slot is very small relative to the single-carrier device, which greatly influences the efficiency of turn-off of the multi-carrier power amplifier, and the objective of energy-saving is hard to be achieved.

US 2004 208139 A1 discloses that in an OFDM-TDMA power line communication system, time slot and carrier frequencies are assigned in a manner that reallocates time slots and carrier frequencies to enhance the efficiency of utilization of the bandwidth.

US 2011 159903 A1 discloses a method for communication using multiple carriers that a mobile station receives information regarding at least one assigned carrier selected from the available carriers based on the multiple carrier capability from a base station.

### Summary of the invention

The present invention provides a control method and device for multi-carrier frequency power amplifier resources, which perform distribution of power amplifier resources in the latitude of time slot, so as to increase the probability that all carrier frequencies of a carrier frequency board are idle in the same time slot, thereby increasing the turn-off time length of the carrier frequency board and improving the energy-saving efficiency.

According to one aspect of the present invention a energy-saving control method for multi-carrier frequency power amplifier resources is provided according to claim 1 .According to another aspect of the present invention a energy-saving control device for multi-carrier frequency power amplifier resources is provided according to claim 7.According to still another aspect of the present invention in a base station is provided according to claim 13.

The control method, device for multi-carrier frequency power amplifier resources and the base station provided by the present invention perform scheduling on channel resources of the multi-carrier frequency power amplifier from the perspective of time slot, so as to increase the probability that carriers of the multi-carrier frequency power amplifier are in an idle state in some time slots in which the carrier frequencies can be turned off, and perform power turn-off control on the multi-carrier frequency power amplifier by using a time slot as the control granularity, thereby achieving the objective of reducing the static power consumption waste of the multi-carrier frequency power amplifier.

### BRIEF DESCRIPTION OF THE DRAWINGS

FIG. 1 is a schematic diagram of energy consumption of a power amplifier tube in the prior art;
FIG. 2 is a schematic diagram of multi-carrier frequency channel resources in a multi-carrier frequency power amplifier in an embodiment of the present invention;
FIG. 3 is a flow chart of a control method for multi-carrier frequency power amplifier resources in Embodiment 1 of the present invention;
FIG. 4 is a schematic diagram of a control method for multi-carrier frequency power amplifier resources in Embodiment 1 of the present invention;
FIG. 5 is a flow chart of an energy-saving control method for multi-carrier frequency power amplifier resources in Embodiment 2 of the present invention;
FIG. 6 is a flow chart of distributing service data to a primary carrier frequency board in Embodiment 2 of the present invention;
FIG. 7 is a schematic diagram of distributing the service data to the primary carrier frequency board in FIG. 6;
FIG. 8 is another flow chart of distributing service data to a primary carrier frequency board in Embodiment 2 of the present invention;
FIG. 9 is a schematic diagram of a base station applying a control device for multi-carrier frequency power amplifier resources in an embodiment of the present invention;
FIG. 10 is a schematic diagram of a control device for multi-carrier frequency power amplifier resources in Embodiment 3 of the present invention;
FIG. 11 is a schematic diagram of an energy-saving control device for multi-carrier frequency power amplifier resources in Embodiment 4 of the present invention; and
FIG. 12 is a schematic diagram of a base station in Embodiment 5 of the present invention.

### DETAILED DESCRIPTION OF THE EMBODIMENTS

The technical solution of the present invention is clearly and completely described in the following with reference to the accompanying drawings. It is obvious that the embodiments described are only a part rather than all of the embodiments of the present invention.

The present invention provides a control method and device for multi-carrier frequency power amplifier resources, which perform scheduling on channel resources of a multi-carrier frequency power amplifier from the perspective of time slot, so as to increase the probability that carriers of the multi-carrier frequency power amplifier are in an idle state in some time slots in which carrier frequencies can be turned off, and perform power turn-off control on the multi-carrier frequency power amplifier by using a time slot as the control granularity, thereby achieving the objective of reducing the static power consumption waste of the multi-carrier frequency power amplifier.

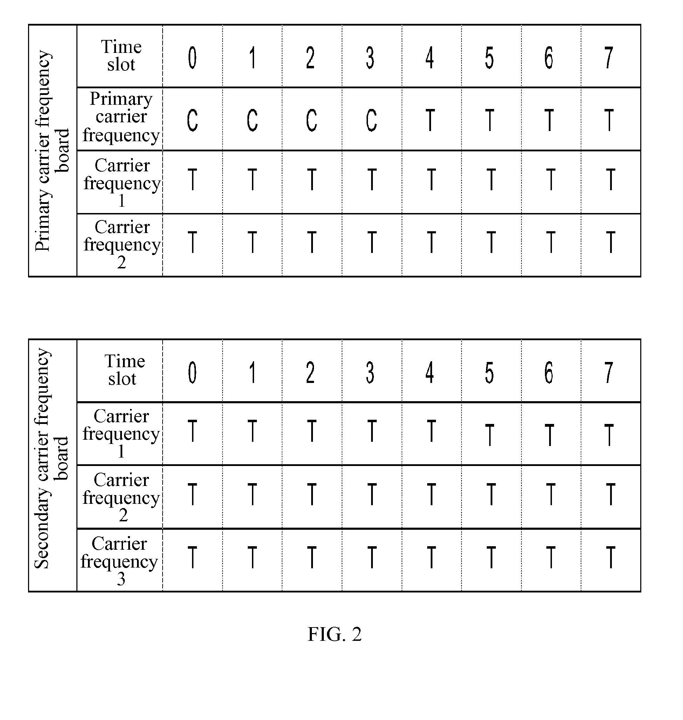

In the embodiments of the present invention, the control method for multi-carrier frequency power amplifier resources may be applied in a 2G or 3G system such as GSM, WCDMA, LTE, and UMTS, so as to perform scheduling on channel resource blocks of a multi-carrier frequency power amplifier. FIG. 2 shows multi-carrier frequency channel resources in the multi-carrier frequency power amplifier, where C represents control signaling, T represents service data, and numerals 0-7 represent a sequence of time slots. The multi-carrier frequency power amplifier includes a primary carrier frequency board and a secondary carrier frequency board, the primary carrier frequency board is a working carrier frequency board where a primary carrier frequency locates, and a part of or all of the time slots of the primary carrier frequency are used to send the control signaling of the system. A time slot of the primary carrier frequency that is used to send the control signaling is a time slot of the primary carrier frequency board in which the carrier frequency cannot be turned off, that is, the primary carrier frequency board cannot be turned off in this time slot. Other time slots of the primary carrier frequency and time slots of a secondary carrier frequency of the primary carrier frequency board are used to send the service data, and when the carrier frequencies corresponding to the time slots are all idle, the primary carrier frequency board may be turned off in the idle time slots, so as to save the static power consumption of the carrier frequency board. The carrier frequencies of the non-carrier frequency board are used to send the service data, and the non-carrier frequency board is a working carrier frequency board of a time slot in which a carrier frequency can be turned off.

### Embodiment 1

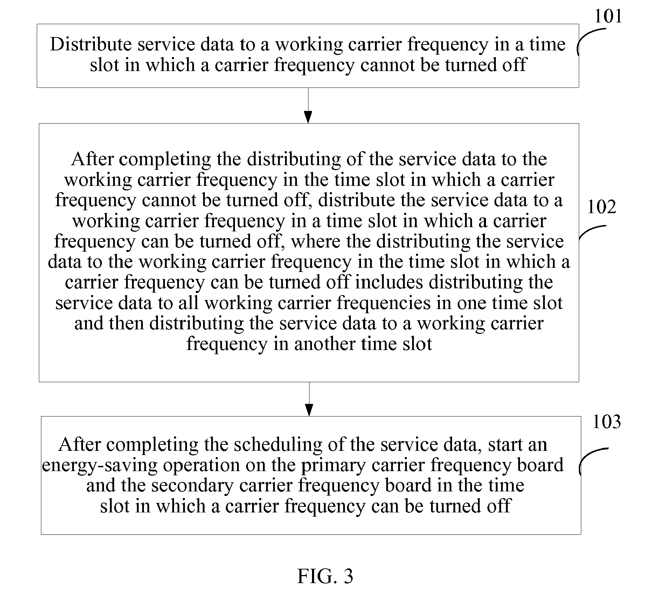

As shown in FIG. 3, a control method for multi-carrier frequency power amplifier resources in Embodiment 1 of the present invention includes the following steps:
Step 101: Distribute service data to a working carrier frequency in a time slot in which a carrier frequency cannot be turned off;
Step 102: After completing the distributing of the service data to the working carrier frequency in the time slot in which the carrier frequency cannot be turned off, distribute the service data to a working carrier frequency in a time slot in which a carrier frequency can be turned off, where the distributing of the service data to the working carrier frequency in the time slot in which a carrier frequency can be turned off includes distributing the service data to all working carrier frequencies in one time slot before distributing the service data to a working carrier frequency in another time slot; and
Step 103: In a time slot in which a carrier frequency can be turned off when all carrier frequencies are not distributed with the service data, turn off the working carrier frequency board where the carrier frequencies locate.

Referring to FIG. 2, in the step 101, the working carrier frequency in the time slot in which the carrier frequency cannot be turned off refers to a secondary carrier frequency that is on the primary carrier frequency board and corresponding to the time slot of the primary carrier frequency used to send control signaling. The time slot of the primary carrier frequency used to send the control signaling is a time slot in which the primary carrier frequency board cannot be turned off. In the time slot, the primary carrier frequency of the primary carrier frequency board is used to send the control signaling, and therefore, in the time slot, even all secondary carrier frequencies are in the idle state (not distributed with the service data), the primary carrier frequency board cannot be turned off. For the secondary carrier frequency board, all carrier frequencies of the secondary carrier frequency board are used to send the service data, and therefore, all time slots belong to a time slot in which the carrier frequency board can be turned off, and the time slot of the primary carrier frequency used to send the service data is also a time slot in which the primary carrier frequency board can be turned off.

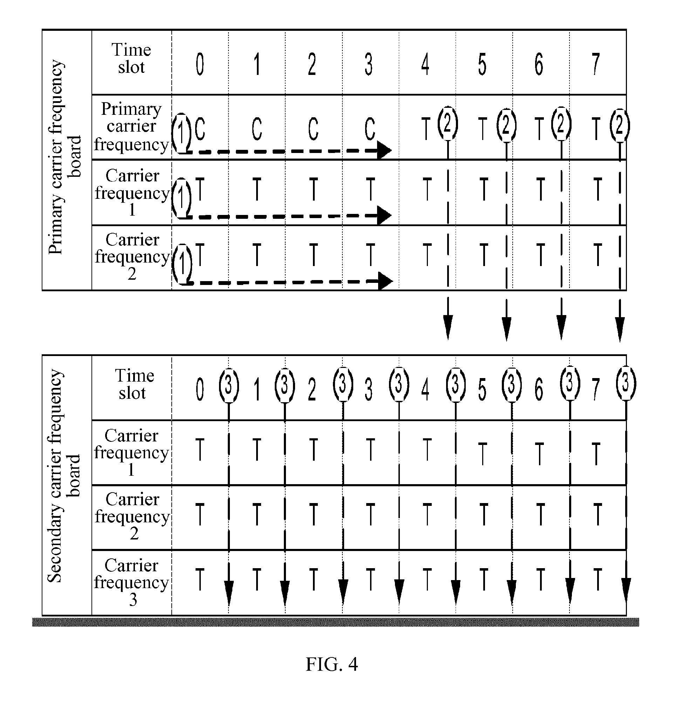

In the performance analysis method described above, distributing the service data to the secondary carrier frequency that is on the primary carrier frequency board and corresponding to the time slot in which the carrier frequency cannot be turned off may improve the effective utilization rate of the primary carrier frequency board, and saving the static power consumption for maintaining the primary carrier frequency board. That is because, in the time slot of the primary carrier frequency board in which the carrier frequency cannot be turned off, no matter whether the secondary carrier frequencies are idle in the time slot, the operation of turning off a carrier frequency board cannot be performed, and therefore, the distributing the service data to the non-carrier frequencies in the time slots preferentially may increase the probability that the carrier frequency board (including the primary carrier frequency board and the secondary carrier frequency board) has all carrier frequencies idle in the time slot in which a carrier frequency can be turned off, thereby improving the energy-saving efficiency of time slot turn-off. As shown in FIG. 4, in the step 102, after completing the distributing of the service data to the working carrier frequency in the time slot in which the carrier frequency cannot be turned off (corresponding to the step marked with 1 in a circle in the drawing), the distributing of the service data to the working carrier frequency in the time slot in which a carrier frequency can be turned off mainly refers to distributing the service data to a working carrier frequency on the secondary carrier frequency board and the working carrier frequency that is on the primary carrier frequency board and corresponding to the time slot in which a carrier frequency can be turned off. The specific sequence of the distributing the service data to the working carrier frequency on the secondary carrier frequency board and the working carrier frequency of the primary carrier frequency board corresponding to the time slot in which a carrier frequency can be turned off may be that, after completing the distributing to the working carrier frequency of the primary carrier frequency board corresponding to the time slot in which a carrier frequency can be turned off (corresponding to the step marked with 2 in a circle in the drawing), the service data is distributed to the working carrier frequency of the secondary carrier frequency board corresponding to the time slot in which a carrier frequency can be turned off (corresponding to the step marked with 3 in a circle in the drawing). If the processing capability of the primary carrier frequency board is greater than that required for processing the service data, that is, the service data does not occupy all the working carrier frequency resources of the primary carrier frequency board, the secondary carrier frequency board may be kept in the turn-off state in all time slots of a time period, thereby effectively saving the static power consumption.

Moreover, in the step 102, the distributing of the service data to the working carrier frequency in the time slot in which a carrier frequency can be turned off includes distributing the service data to all carrier frequencies in one time slot of the secondary carrier frequency board before distributing the service data to a working carrier frequency in another time slot. That is, the service data is distributed to all carrier frequencies corresponding to the time slot in which a carrier frequency can be turned off in the latitude of time slot. For example, as shown in FIG. 4, the secondary carrier frequency board has three carrier frequencies and 8 time slots (0-7). When the service data is distributed to the secondary carrier frequency board, the service data is distributed to the three carrier frequencies corresponding to the first time slot (for example, 0), and the service data is distributed to a next time slot (for example 1) after the first time slot is saturated. The service is distributed in this way until the service data is totally distributed.

In the step 103, in the time slot in which a carrier frequency can be turned off and all the carrier frequencies are not distributed with the service data, the working carrier frequency board where the carrier frequencies locate is turned off, that is, in the time slot in which a carrier frequency can be turned off, if all the carrier frequencies of a carrier frequency board (including the primary carrier frequency board and the secondary carrier frequency board) in a certain time slot are not distributed with the service data and in the idle state, the carrier frequency board is turned off in the time slot, so as to eliminate the static power consumption that is used for maintaining the carrier frequency board to be in the working state.

In the control method for multi-carrier frequency power amplifier resources provided in the embodiment of the present invention, scheduling is performed on channel resources of the multi-carrier frequency power amplifier from the perspective of time slot, so as to increase the probability that carriers of the multi-carrier frequency power amplifier are in an idle state in some time slots in which the carrier frequencies can be turned off, and power turn-off control is performed on the multi-carrier frequency power amplifier by using a time slot as the control granularity, thereby achieving the objective of reducing the static power consumption waste of the multi-carrier frequency power amplifier.

### Embodiment 2

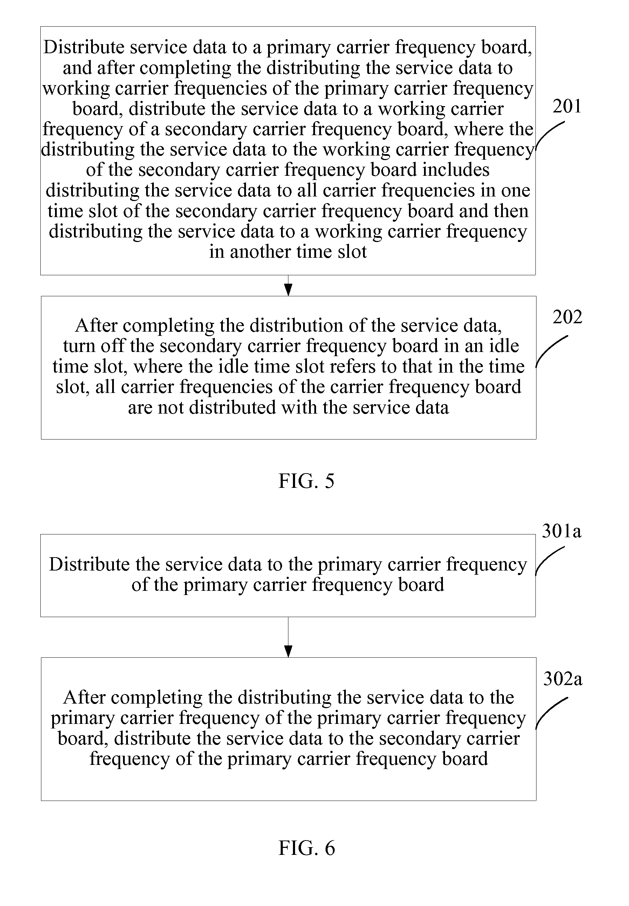

As shown in FIG. 5, an energy-saving control method for multi-carrier frequency power amplifier resources in Embodiment 2 of the present invention includes the following steps:
Step 201: Distribute service data to a primary carrier frequency board, and after completing the distributing the service data to at least one working carrier frequency of the primary carrier frequency board, distribute the service data to a working carrier frequency of a secondary carrier frequency board, where the distributing of the service data to the working carrier frequency of the secondary carrier frequency board includes distributing the service data to all carrier frequencies in a time slot of the secondary carrier frequency board before distributing the service data to a working carrier frequency in another time slot; and
Step 202: After completing the distribution of the service data, turn off the secondary carrier frequency board in an idle time slot, where the idle time slot refers to a time slot in which all carrier frequencies of a carrier frequency board are not distributed with the service data.

In the step 201, the specific step of distributing the service data to the primary carrier frequency board is based on whether the primary carrier frequency board can be turned off, therefore, there are two situations of the time slot in which the carrier frequency can be or cannot be turned off.

The first situation is the time slot of the primary carrier frequency board in which the carrier frequency cannot be turned off, in such case, the energy-saving control is not performed on the primary carrier frequency board, and the service data can be distributed to the primary carrier frequency board according to specific requirements.

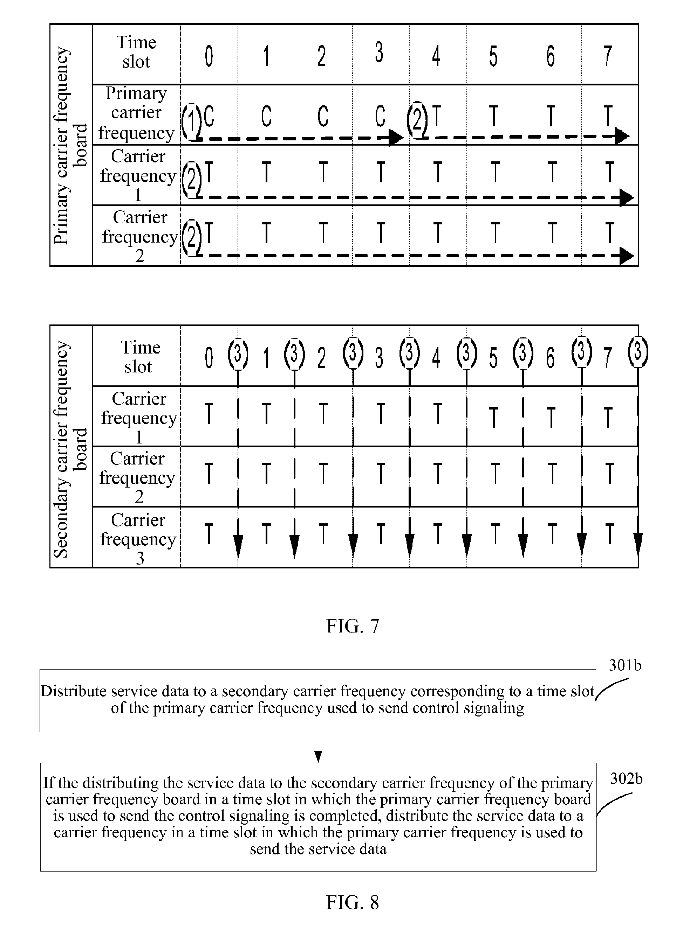

As shown in FIG. 6 and FIG. 7, in the step 201, the specific step of distributing the service data to the primary carrier frequency board includes:
Step 301a: Distribute the service data to the primary carrier frequency of the primary carrier frequency board.
Step 302a: After completing the distributing the service data to the primary carrier frequency of the primary carrier frequency board, distribute the service data to the secondary carrier frequency of the primary carrier frequency board.

In some scenarios of actual applications, the primary carrier frequency board cannot be turned off, for example, in order to ensure coverage, the primary carrier frequency on the primary carrier frequency board needs to keep performing transmission with full power, or all time slots in the primary carrier frequency on the primary carrier frequency board are used to send control signaling. The primary carrier frequency board cannot be turned off, and therefore, the scheduling is performed on carrier frequency channel resources according to the change of a wireless channel, for example, according to factors such as the distance between a user and a base station, the real-time channel state of the user, and the quality of service requirement (QoS) of the borne service.

In the step 201, the second situation of distributing the service data to the primary carrier frequency board is that the primary carrier frequency board has the time slot in which a carrier frequency can be turned off. The time slot in which a carrier frequency can be turned off refers to that in a certain time slot, the primary carrier frequency board or the secondary carrier frequency board can be turned off when all the carrier frequencies are idle. On the contrary, if the time slot of the primary carrier frequency is used to send the control signaling, in this time slot, no matter whether other carrier frequencies of the primary carrier frequency board are idle, the turn-off operation cannot be performed, and the time slot is the time slot of the carrier frequency board (primary carrier frequency board) in which the carrier frequency cannot be turned off. All carrier frequencies of the secondary carrier frequency board are used to send the service data, so the secondary carrier frequency board does not have the time slot in which the carrier frequency cannot be turned off.

As shown in FIG. 8, when the primary carrier frequency board has the time slot in which a carrier frequency can be turned off, the step of distributing the service data to the primary carrier frequency board in the step 201 includes:
Step 301b: Distribute service data to a secondary carrier frequency of the primary carrier frequency corresponding to a time slot used to send control signaling.
Step 302b: After completing the distributing the service data to the secondary carrier frequency of the primary carrier frequency board in the time slot in which the primary carrier frequency board is used to send the control signaling, distribute the service data to a working carrier frequency of the primary carrier frequency board in a time slot in which the primary carrier frequency board is used to send the service data, where the distributing the service data to the working carrier frequency of the primary carrier frequency board in a time slot in which the primary carrier frequency is used to send the service data includes completing distributing the service data to all carrier frequencies in one time slot in which the primary carrier frequency board is used to send the service data before distributing the service data to a working carrier frequency in another time slot.

The time slot of the primary carrier frequency board used to send the control signaling is a time slot in which the primary carrier frequency board cannot be turned off, and the another time slot of the primary carrier frequency board used to send the service data is a time slot in which the primary carrier frequency board can be turned off.

As shown in FIG. 4, some time slots of the primary carrier frequency board, for example, the first 4 time slots, are used to send the control signaling, and the 4 time slots used to send the control signaling are the time slots of the primary carrier frequency board in which the carrier frequency cannot be turned off. Therefore, the service data is preferentially distributed to other carrier frequencies corresponding to the time slots in which the carrier frequency cannot be turned off, thereby increasing the probability that a working carrier frequency channel corresponding to other time slots in which a carrier frequency can be turned off is idle. The specific scheduling sequence of the primary carrier frequency board is that, the first step is corresponding to the step marked with 1 in the circle of FIG. 7, in which the service data is distributed to the working carrier frequency that is on the primary carrier frequency board and corresponding to the time slot in which the carrier frequency cannot be turned off; the second step is corresponding to the step marked with 2 in the circle of FIG. 7, in which the rest of the service data is distributed, according to the sequence of the time slots, to the primary carrier frequency and other carrier frequencies that are on the primary carrier frequency board and corresponding to the time slots in which a carrier frequency can be turned off; and then, corresponding to the step marked with 3 in a circle of the drawing, in the step 202, the rest of the service data is distributed to the secondary carrier frequency board according to the sequence of the time slots.

After the service data is distributed, the following situations exist: in the first situation, if the time slot in which the primary carrier frequency board can be turned off has an idle time slot in which no carrier frequency is distributed with the service data, the primary carrier frequency board is turned off in the idle time slot, that is, the service data processing capability of the primary carrier frequency board is greater than that required for processing the service data, in this case, there is the situation that the time slot of the primary carrier frequency board when the primary carrier frequency board can be turned off has an idle time slot exists; in the second situation, if all the service data is distributed to the secondary carrier frequency of the primary carrier frequency board corresponding to the time slots in which the primary carrier frequency board cannot be turned off, the primary carrier frequency board is turned off in another time slot in which the primary carrier frequency board can be turned off, that is, if the service data processing capability that is of the secondary carrier frequency of the primary carrier frequency board and corresponding to the time slot used to send the control signaling is greater than that required for processing the service data, the primary carrier frequency board may be turned off in all time slots in which the primary carrier frequency board can be turned off; in the third situation, if the processing capability of the primary carrier frequency board is greater than that required for processing the service data, the service data is totally distributed to the primary carrier frequency board and the secondary carrier frequency board is turned off.

In the step 201, after the distributing the service data to the at least one working carrier frequency of the primary carrier frequency board is completed, the service data is distributed to the working carrier frequency of the secondary carrier frequency board. The distributing the service data to the working carrier frequency of the secondary carrier frequency board includes completing distributing the service data to all carrier frequencies in a time slot of the secondary carrier frequency board before distributing the service data to the working carrier frequency in another time slot.

In the control method for multi-carrier frequency power amplifier resources, scheduling is performed on channel resources of the multi-carrier frequency power amplifier from the perspective of time slot, so as to increase the probability that carriers of the multi-carrier frequency power amplifier are in an idle state in some time slots in which the carrier frequencies can be turned off, and power turn-off control is performed on the multi-carrier frequency power amplifier by using a time slot as the control granularity, thereby achieving the objective of reducing the static power consumption waste of the multi-carrier frequency power amplifier.

### Embodiment 3

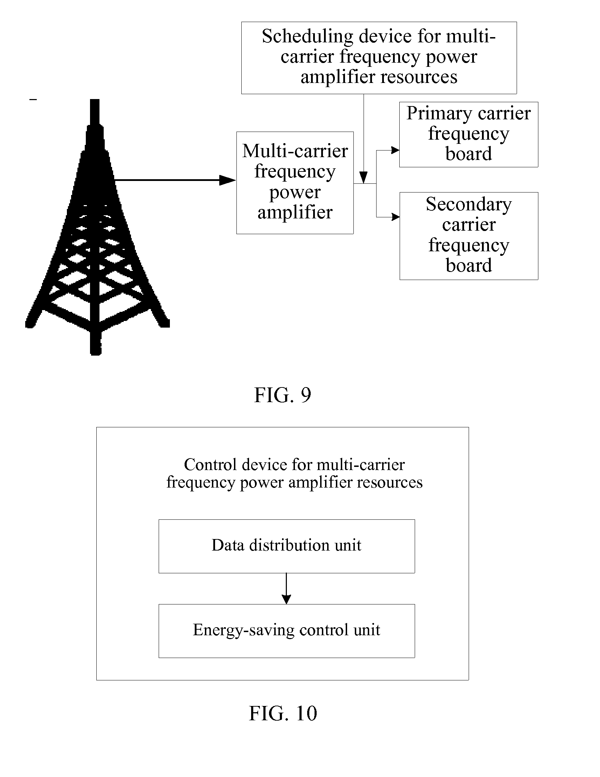

As shown in FIG. 9 and FIG. 10, Embodiment 3 of the present invention provides a control device for multi-carrier frequency power amplifier resources corresponding to the Embodiment 1, which includes a data distribution unit and an energy-saving control unit, where:
the data distribution unit is configured to: distribute service data to a working carrier frequency in a time slot in which a carrier frequency cannot be turned off, and after completing the distributing of the service data to the working carrier frequency in the time slot in which the carrier frequency cannot be turned off, distribute the service data to a working carrier frequency in a time slot in which a carrier frequency can be turned off, where the distributing of the service data to the working carrier frequency in the time slot in which a carrier frequency can be turned off includes distributing the service data to all working carrier frequencies in a time slot before distributing the service data to a working carrier frequency in another time slot.

The working carrier frequency in the time slot in which the carrier frequency cannot be turned off is a secondary carrier frequency that is on the primary carrier frequency board and corresponding to the time slot of the primary carrier frequency used to send the control signaling.

The distributing, by the data distribution unit, the service data to the working carrier frequency in the time slot in which a carrier frequency can be turned off includes distributing the service data to a working carrier frequency of a secondary carrier frequency board and the working carrier frequency that is on the primary carrier frequency board and corresponding to the time slot in which a carrier frequency can be turned off.

The distributing the service data to the working carrier frequency of the secondary carrier frequency board and the working carrier frequency of the primary carrier frequency board corresponding to the time slot in which a carrier frequency can be turned off includes, after completing the distributing the service data to the working carrier frequency of the primary carrier frequency board corresponding to the time slot in which a carrier frequency can be turned off, distributing the service data to the working carrier frequency of the secondary carrier frequency board corresponding to the time slot in which a carrier frequency can be turned off.

The time slot of the primary carrier frequency board used to send the control signaling is a time slot in which the primary carrier frequency board cannot be turned off, and the time slot of the primary carrier frequency used to send the service data is a time slot in which the primary carrier frequency board can be turned off.

The energy-saving control unit is configured to: after the distribution of the service data is completed, in the time slot in which a carrier frequency can be turned off and all carrier frequencies are not distributed with the service data, turn off the working carrier frequency board where the carrier frequencies locate.

It can be seen that, the energy-saving control device for multi-carrier frequency power amplifier resources distribute that required for processing the service data to each working carrier frequency corresponding to the time slot in which the carrier frequency can be turned of in the latitude of time slot, so that the probability that all carrier frequencies in the time slot in which a carrier frequency can be turned off are not distributed with the service data is obviously increased. That is, if the service data distribution is performed according to the service data distribution method provided by the energy-saving control device, as long as the processing or load capability of the multi-carrier frequency power amplifier is greater than that required for processing the service data, the situation that the carrier frequencies are not distributed with the service data in the time slot in which a carrier frequency can be turned off definitely occurs, thereby effectively improving the energy-saving efficiency of the time slot turn-off of the carrier frequency board.

### Embodiment 4

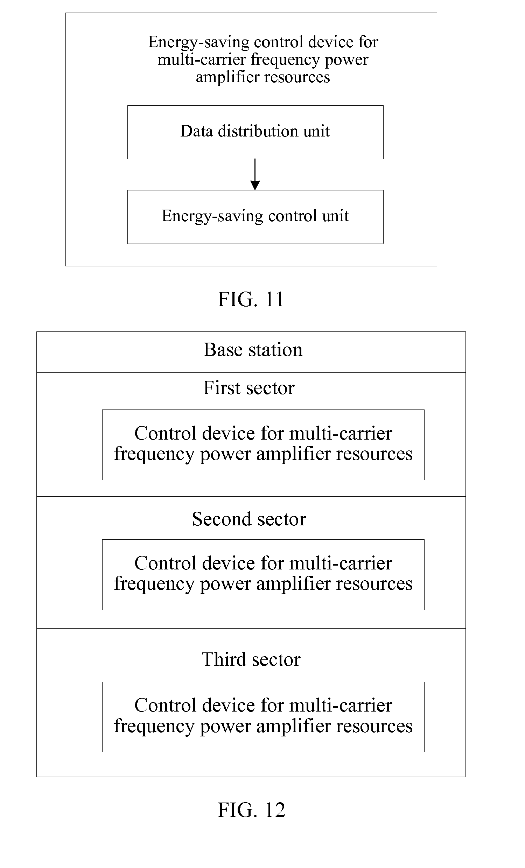

As shown in FIG. 11, Embodiment 4 of the present invention provides an energy-saving control device for multi-carrier frequency power amplifier resources corresponding to the Embodiment 2, which includes a data distribution unit and an energy-saving control unit, where:
the data distribution unit is configured to: distribute service data to a primary carrier frequency board, and after completing the distributing the service data to at least one working carrier frequency of the primary carrier frequency board, distribute the service data to a working carrier frequency of a secondary carrier frequency board, where the distributing the service data to the working carrier frequency of the secondary carrier frequency board includes distributing the service data to all carrier frequencies in a time slot of the secondary carrier frequency board before distributing the service data to a working carrier frequency in another time slot; and
the energy-saving control unit is configured to: after completing the distribution of the service data, turn off the secondary carrier frequency board in an idle time slot, where the idle time slot refers to a time slot in which all carrier frequencies of the carrier frequency board are not distributed with the service data.

The distributing, by the data distribution unit, the service data to the primary carrier frequency board includes distributing the service data to the secondary carrier frequency in a time slot in which the primary carrier frequency board is used to send the control signaling; after completing the distributing the service data to the secondary carrier frequency in the time slot in which the primary carrier frequency board is used to send the control signaling, distributing the service data to a working carrier frequency of the primary carrier frequency board in a time slot in which the primary carrier frequency board is used to send the service data, where the distributing the service data to the working carrier frequency of the primary carrier frequency board in a time slot in which the primary carrier frequency board is used to send the service data includes completing distributing the service data to all carrier frequencies in one time slot in which the primary carrier frequency board is used to send the service data before distributing the service data to a working carrier frequency in another time slot.

The time slot of the primary carrier frequency board used to send the control signaling is a time slot in which the primary carrier frequency board cannot be turned off, and the another time slot of the primary carrier frequency board used to send the service data is a time slot in which the primary carrier frequency board can be turned off.

After completing the distribution of the service data, the data distribution unit is further configured to: if there is an idle time slot in which no carrier frequency is distributed with the service data within the time slots in which the primary carrier frequency board can be turned off, turn off the primary carrier frequency board in the idle time slot.

If the data distribution unit distributes all the service data to the secondary carrier frequencies of the primary carrier frequency board that are corresponding to the time slot in which the primary carrier frequency board cannot be turned off, the primary carrier frequency board is turned off in another time slot in which the primary carrier frequency board can be turned off.

If the processing capability of the primary carrier frequency board is greater than that required for processing the service data, the service data is totally distributed to the primary carrier frequency board, and the secondary carrier frequency board is turned off.

It can be seen that, the data distribution unit of the energy-saving control device for multi-carrier frequency power amplifier resources first distributes the service data to other carrier frequencies corresponding to the time slot of the primary carrier frequency board in which the carrier frequency cannot be turned off, and after completing the distributing the service data to the other carrier frequencies corresponding to the time slot of the primary carrier frequency board in which the carrier frequency cannot be turned off, distributes, according to the sequence of the time slots, the rest of the service data to the primary carrier frequency of the primary carrier frequency board and other carrier frequencies corresponding to the time slot in which a carrier frequency can be turned off. The energy-saving control unit first traverses each of time slots in which a carrier frequency can be turned off, and turns off the primary carrier frequency board in the idle time slot of the time slots in which a carrier frequency can be turned off; then traverses each of time slots of the secondary carrier frequency board, and turns off the secondary carrier frequency board in the idle time slot, thereby improving the energy-saving efficiency of time slot turn-off through reasonable distribution of the power amplifier resources.

### Embodiment 5

As shown in FIG. 9 and FIG. 11, Embodiment 5 of the present invention provides a base station, and the base station includes several sectors, each sector includes a multi-carrier frequency power amplifier, the multi-carrier frequency power amplifier is configured to bear multiple carrier frequencies and send a data signal to a terminal; each sector includes a control device for multi-carrier frequency power amplifier resources, the control device for multi-carrier frequency power amplifier resources is configured to: distribute service data to a working carrier frequency in a time slot in which a carrier frequency cannot be turned off, and after completing the distributing of the service data to the working carrier frequency in the time slot in which the carrier frequency cannot be turned off, distribute the service data to a working carrier frequency in a time slot in which a carrier frequency can be turned off, where the distributing of the service data to the working carrier frequency in the time slot in which a carrier frequency can be turned off includes distributing the service data to all working carrier frequencies in one time slot before distributing the service data to a working carrier frequency in another time slot.

The number of the sectors may be different in specific applications, and for ease of showing, the number of the sectors in this embodiment is 3.

The control devices for multi-carrier frequency power amplifier resources of different sectors in the base station, distribute, according to the sequence of different time slots, the service data to working carrier frequency resources corresponding to the time slots in which a carrier frequency can be turned off, for example, it is arranged that similar service data of different cells is sent in different time slots, so as to avoid mutual interference from influencing the sending quality. In this way, the similar service data of different cells is processed in different time slots, the channel traverse sequence of the time slots in which a carrier frequency can be turned off of different sectors may be adjusted dynamically and randomly, so that the services of the sectors are staggered in the most concentrated time slot numbers, thereby reducing the interference among the sectors, averaging the interference of the whole GSM system, and further obtaining better network performance and energy-saving effect.

The communications system provided in the embodiments of the present invention is introduced in detail, specific examples are applied in the specification to illustrate principles and implementations of the present invention, and the illustration of the embodiments are only used to help understanding the method and core idea of the present invention.

## Claims

1. An energy-saving control method for multi-carrier frequency power amplifier resources, comprising:
distributing (201) service data to a primary carrier frequency board, and after completing the distributing of the service data to at least one working carrier frequency of the primary carrier frequency board, distributing the service data to at least one working carrier frequency of a secondary carrier frequency board, wherein the distributing of the service data to the at least one working carrier frequency of the secondary carrier frequency board comprises completing distributing the service data to all of the at least one carrier frequency in one time slot of the secondary carrier frequency board before distributing the service data to at least one working carrier frequency in another time slot; and
after completing the distribution of the service data, turning off (202) the secondary carrier frequency board in an idle time slot, wherein the idle time slot refers to a time slot in which all carrier frequencies of a carrier frequency board are not distributed with the service data.

2. The method according to claim 1, wherein, the distributing of the service data to the primary carrier frequency board comprises:
distributing the service data to a secondary carrier frequency of the primary carrier frequency board in a time slot in which the primary carrier frequency board is used to send control signaling; and
after completing the distributing of the service data to the secondary carrier frequency of the primary carrier frequency board in the time slot in which the primary carrier frequency board is used to send the control signaling, distributing the service data to a working carrier frequency of the primary carrier frequency board in a time slot in which the primary carrier frequency is used to send the service data, wherein the distributing of the service data to the working carrier frequency of the primary carrier frequency board in a time slot in which the primary carrier frequency is used to send the service data comprises completing distributing the service data to all carrier frequencies in one time slot in which the primary carrier frequency board is used to send the service data before distributing the service data to a working carrier frequency in another time slot.

3. The method according to claim 2, wherein the time slot of the primary carrier frequency used to send the control signaling is a time slot in which the primary carrier frequency board cannot be turned off, and the another time slot of the primary carrier frequency used to send the service data is a time slot in which the primary carrier frequency board can be turned off.

4. The method according to any one of claims 1 to 3, wherein, if processing capability of the primary carrier frequency board is greater than that required for processing the service data, the service data is totally distributed to the primary carrier frequency board, and the secondary carrier frequency board is turned off.

5. The method according to claim 4, wherein after the completing the distribution of the service data, the method further comprises, if there is an idle time slot in which no carrier frequency is distributed with the service data within the time slots in which the primary carrier frequency board can be turned off, turning off the primary carrier frequency board in the idle time slot.

6. The method according to claim 4, wherein, if all the service data is distributed to secondary carrier frequencies of the primary carrier frequency board that are corresponding to the time slot in which the primary carrier frequency board cannot be turned off, the primary carrier frequency board is turned off in another time slot in which the primary carrier frequency board can be turned off.

7. An energy-saving control device for multi-carrier frequency power amplifier resources, comprising:
a data distribution unit, configured to: distribute service data to a primary carrier frequency board, and after completing the distributing of the service data to at least one working carrier frequency of the primary carrier frequency board, distribute the service data to a working carrier frequency of a secondary carrier frequency board, wherein the distributing of the service data to the working carrier frequency of the secondary carrier frequency board comprises distributing the service data to all carrier frequencies in one time slot of the secondary carrier frequency board before distributing the service data to a working carrier frequency in another time slot; and
an energy-saving control unit, configured to: after the distribution of the service data is completed, turn off the secondary carrier frequency board in an idle time slot, wherein the idle time slot refers to a time slot in which all carrier frequencies of a carrier frequency board are not distributed with the service data.

8. The device according to claim 7, wherein, the distributing, by the data distribution unit, the service data to the primary carrier frequency board comprises:
distributing the service data to a secondary carrier frequency of the primary carrier frequency board in a time slot in which the primary carrier frequency board is used to send control signaling; and
after completing the distributing of the service data to the secondary carrier frequency of the primary carrier frequency board in the time slot in which the primary carrier frequency board is used to send the control signaling, distributing the service data to a working carrier frequency of the primary carrier frequency board in a time slot in which the primary carrier frequency is used to send the service data, wherein the distributing of the service data to the working carrier frequency of the primary carrier frequency board in a time slot in which the primary carrier frequency is used to send the service data comprises completing distributing the service data to all carrier frequencies in one time slot in which the primary carrier frequency board is used to send the service data before distributing the service data to a working carrier frequency in another time slot.

9. The device according to claim 8, wherein the time slot of the primary carrier frequency board used to send the control signaling is a time slot in which the primary carrier frequency board cannot be turned off, and the another time slot of the primary carrier frequency board used to send the service data is a time slot in which the primary carrier frequency board can be turned off.

10. The device according to any one of claims 7 to 9, wherein, if processing capability of the primary carrier frequency board is greater than that required for processing the service data, the service data is totally distributed to the primary carrier frequency board, and the secondary carrier frequency board is turned off.

11. The device according to claim 10, wherein after completing the distribution of the service data, the data distribution unit is further configured to: if there is an idle time slot in which no carrier frequency is distributed with the service data within the time slots in which the primary carrier frequency board can be turned off, turn off the primary carrier frequency board in the idle time slot.

12. The device according to claim 10, wherein, if the data distribution unit distributes all the service data to secondary carrier frequencies of the primary carrier frequency board that are corresponding to the time slot in which the primary carrier frequency board cannot be turned off, the primary carrier frequency board is turned off in another time slot in which the primary carrier frequency board can be turned off.

13. A base station, comprising several sectors, each sector comprising a multi-carrier frequency power amplifier, the multi-carrier frequency power amplifier being configured to bear multiple carrier frequencies and send a data signal to a terminal, wherein each sector comprises a control device for multi-carrier frequency power amplifier resources, the control device for multi-carrier frequency power amplifier resources is configured to: distribute service data to a primary carrier frequency board, after completing the distributing of the service data to at least one working carrier frequency of the primary carrier frequency board, distribute the service data to a working carrier frequency of a secondary carrier frequency board, wherein the distributing of the service data to the working carrier frequency of the secondary carrier frequency board comprises distributing the service data to all working carrier frequencies in one time slot of the secondary carrier frequency board before distributing the service data to a working carrier frequency in another time slot; and after completing the distribution of the service data, turn off the secondary carrier frequency board in an idle time slot, wherein the idle time slot refers to a time slot in which all carrier frequencies of a carrier frequency board are not distributed with the service data.

## Patentansprüche

1. Energiesparsteuerverfahren für Mehrträgerfrequenz-Leistungsverstärkerressourcen, das Folgendes umfasst:
Verteilen (201) von Dienstdaten auf eine primäre Trägerfrequenzplatine und nach dem Vollenden der Verteilung der Dienstdaten auf mindestens eine Arbeitsträgerfrequenz der primären Trägerfrequenzplatine Verteilen der Dienstdaten auf mindestens eine Arbeitsträgerfrequenz einer sekundären Trägerfrequenzplatine, wobei die Verteilung der Dienstdaten auf die mindestens eine Arbeitsträgerfrequenz der sekundären Trägerfrequenzplatine das Vollenden der Verteilung der Dienstdaten auf alle der mindestens einen Trägerfrequenz in einem Zeitschlitz der sekundären Trägerfrequenzplatine vor dem Verteilen der Dienstdaten auf mindestens eine Arbeitsträgerfrequenz in einem anderen Zeitschlitz umfasst; und
nach dem Vollenden der Verteilung der Dienstdaten Ausschalten (202) der sekundären Trägerfrequenzplatine in einem inaktiven Zeitschlitz, wobei sich der inaktive Zeitschlitz auf einen Zeitschlitz bezieht, in dem auf alle Trägerfrequenzen einer Trägerfrequenzplatine nicht die Dienstdaten verteilt werden.

2. Verfahren nach Anspruch 1, wobei das Verteilen der Dienstdaten auf die primäre Trägerfrequenzplatine Folgendes umfasst:
Verteilen der Dienstdaten auf eine sekundäre Trägerfrequenz der primären Trägerfrequenzplatine in einem Zeitschlitz, in dem die primäre Trägerfrequenzplatine verwendet wird, um eine Steuersignalisierung zu senden; und
nach dem Vollenden der Verteilung der Dienstdaten auf die sekundäre Trägerfrequenz der primären Trägerfrequenzplatine im Zeitschlitz, in dem die primäre Trägerfrequenzplatine verwendet wird, um die Steuersignalisierung zu senden, Verteilen der Dienstdaten auf eine Arbeitsträgerfrequenz der primären Trägerfrequenzplatine in einem Zeitschlitz, in dem die primäre Trägerfrequenz verwendet wird, um die Dienstdaten zu senden, wobei die Verteilung der Dienstdaten auf die Arbeitsträgerfrequenz der primären Trägerfrequenzplatine in einem Zeitschlitz, in dem die primäre Trägerfrequenz verwendet wird, um die Dienstdaten zu senden, das Vollenden der Verteilung der Dienstdaten auf alle Trägerfrequenzen in einem Zeitschlitz, in dem die primäre Trägerfrequenzplatine verwendet wird, um die Dienstdaten zu senden, vor dem Verteilen der Dienstdaten auf eine Arbeitsträgerfrequenz in einem anderen Zeitschlitz umfasst.

3. Verfahren nach Anspruch 2, wobei der Zeitschlitz der primären Trägerfrequenz, die verwendet wird, um die Steuersignalisierung zu senden, ein Zeitschlitz ist, in dem die primäre Trägerfrequenzplatine nicht ausgeschaltet werden kann, und der andere Zeitschlitz der primären Trägerfrequenz, die verwendet wird, um die Dienstdaten zu senden, ein Zeitschlitz ist, in dem die primäre Trägerfrequenzplatine ausgeschaltet werden kann.

4. Verfahren nach einem der Ansprüche 1 bis 3, wobei, wenn die Verarbeitungsfahigkeit der primären Trägerfrequenzplatine größer ist als jene, die zum Verarbeiten der Dienstdaten erforderlich ist, die Dienstdaten vollständig auf die primäre Trägerfrequenzplatine verteilt werden und die sekundäre Trägerfrequenzplatine ausgeschaltet wird.

5. Verfahren nach Anspruch 4, wobei nach dem Vollenden der Verteilung der Dienstdaten das Verfahren ferner, wenn ein inaktiver Zeitschlitz, in dem auf keine Trägerfrequenz die Dienstdaten verteilt werden, innerhalb der Zeitschlitze vorhanden ist, in denen die primäre Trägerfrequenzplatine ausgeschaltet werden kann, das Ausschalten der primären Trägerfrequenzplatine im inaktiven Zeitschlitz umfasst.

6. Verfahren nach Anspruch 4, wobei, wenn alle Dienstdaten auf die sekundären Trägerfrequenzen der primären Trägerfrequenzplatine verteilt werden, die dem Zeitschlitz entsprechen, in dem die primäre Trägerfrequenzplatine nicht ausgeschaltet werden kann, die primäre Trägerfrequenzplatine in einem anderen Zeitschlitz ausgeschaltet wird, in dem die primäre Trägerfrequenzplatine ausgeschaltet werden kann.

7. Energiesparsteuervorrichtung für Mehrträgerfrequenz-Leistungsverstärkerressourcen, die Folgendes umfasst:
eine Datenverteilungseinheit, die dazu konfiguriert ist: Dienstdaten auf eine primäre Trägerfrequenzplatine zu verteilen und nach der Vollendung der Verteilung der Dienstdaten auf mindestens eine Arbeitsträgerfrequenz der primären Trägerfrequenzplatine die Dienstdaten auf eine Arbeitsträgerfrequenz einer sekundären Trägerfrequenzplatine zu verteilen, wobei die Verteilung der Dienstdaten auf die Arbeitsträgerfrequenz der sekundären Trägerfrequenzplatine das Verteilen der Dienstdaten auf alle Trägerfrequenzen in einem Zeitschlitz der sekundären Trägerfrequenzplatine vor dem Verteilen der Dienstdaten auf eine Arbeitsträgerfrequenz in einem anderen Zeitschlitz umfasst; und
eine Energiesparsteuereinheit, die dazu konfiguriert ist: nachdem die Verteilung der Dienstdaten vollendet ist, die sekundäre Trägerfrequenzplatine in einem inaktiven Zeitschlitz auszuschalten, wobei sich der inaktive Zeitschlitz auf einen Zeitschlitz bezieht, in dem auf alle Trägerfrequenzen einer Trägerfrequenzplatine nicht die Dienstdaten verteilt werden.

8. Vorrichtung nach Anspruch 7, wobei das Verteilen der Dienstdaten auf die primäre Trägerfrequenzplatine durch die Datenverteilungseinheit Folgendes umfasst:
Verteilen der Dienstdaten auf eine sekundäre Trägerfrequenz der primären Trägerfrequenzplatine in einem Zeitschlitz, in dem die primäre Trägerfrequenzplatine verwendet wird, um eine Steuersignalisierung zu senden; und
nach dem Vollenden der Verteilung der Dienstdaten auf die sekundäre Trägerfrequenz der primären Trägerfrequenzplatine in dem Zeitschlitz, in dem die primäre Trägerfrequenzplatine verwendet wird, um die Steuersignalisierung zu senden, Verteilen der Dienstdaten auf eine Arbeitsträgerfrequenz der primären Trägerfrequenzplatine in einem Zeitschlitz, in dem die primäre Trägerfrequenz verwendet wird, um die Dienstdaten zu senden, wobei die Verteilung der Dienstdaten auf die Arbeitsträgerfrequenz der primären Trägerfrequenzplatine in einem Zeitschlitz, in dem die primäre Trägerfrequenz verwendet wird, um die Dienstdaten zu senden, das Vollenden der Verteilung der Dienstdaten auf alle Trägerfrequenzen in einem Zeitschlitz, in dem die primäre Trägerfrequenzplatine verwendet wird, um die Dienstdaten zu senden, vor dem Verteilen der Dienstdaten auf eine Arbeitsträgerfrequenz in einem anderen Zeitschlitz umfasst.

9. Vorrichtung nach Anspruch 8, wobei der Zeitschlitz der primären Trägerfrequenzplatine, die verwendet wird, um die Steuersignalisierung zu senden, ein Zeitschlitz ist, in dem die primäre Trägerfrequenzplatine nicht ausgeschaltet werden kann, und der andere Zeitschlitz der primären Trägerfrequenzplatine, die verwendet wird, um die Dienstdaten zu senden, ein Zeitschlitz ist, in dem die primäre Trägerfrequenzplatine ausgeschaltet werden kann.

10. Vorrichtung nach einem der Ansprüche 7 bis 9, wobei, wenn die Verarbeitungsfähigkeit der primären Trägerfrequenzplatine größer ist als jene, die zum Verarbeiten der Dienstdaten erforderlich ist, die Dienstdaten vollständig auf die primäre Trägerfrequenzplatine verteilt werden und die sekundäre Trägerfrequenzplatine ausgeschaltet wird.

11. Vorrichtung nach Anspruch 10, wobei nach dem Vollenden der Verteilung der Dienstdaten die Datenverteilungseinheit ferner dazu konfiguriert ist: wenn ein inaktiver Zeitschlitz, in dem auf keine Trägerfrequenz die Dienstdaten verteilt werden, innerhalb der Zeitschlitze vorhanden ist, in denen die primäre Trägerfrequenzplatine ausgeschaltet werden kann, die primäre Trägerfrequenzplatine im inaktiven Zeitschlitz auszuschalten.

12. Vorrichtung nach Anspruch 10, wobei, wenn die Datenverteilungseinheit alle Dienstdaten auf sekundäre Trägerfrequenzen der primären Trägerfrequenzplatine verteilt, die dem Zeitschlitz entsprechen, in dem die primäre Trägerfrequenzplatine nicht ausgeschaltet werden kann, die primäre Trägerfrequenzplatine in einem anderen Zeitschlitz ausgeschaltet wird, in dem die primäre Trägerfrequenzplatine ausgeschaltet werden kann.

13. Basisstation mit mehreren Sektoren, wobei jeder Sektor einen Mehrträgerfrequenz-Leistungsverstärker umfasst, wobei der Mehrträgerfrequenz-Leistungsverstärker dazu konfiguriert ist, mehrere Trägerfrequenzen zu tragen und ein Datensignal zu einem Endgerät zu senden, wobei jeder Sektor eine Steuervorrichtung für Mehrträgerfrequenz-Leistungsverstärkerressourcen umfasst, wobei die Steuervorrichtung für Mehrträgerfrequenz-Leistungsverstärkerressourcen dazu konfiguriert ist: Dienstdaten auf eine primäre Trägerfrequenzplatine zu verteilen, nach der Vollendung der Verteilung der Dienstdaten auf mindestens eine Arbeitsträgerfrequenz der primären Trägerfrequenzplatine die Dienstdaten auf eine Arbeitsträgerfrequenz einer sekundären Trägerfrequenzplatine zu verteilen, wobei das Verteilen der Dienstdaten auf die Arbeitsträgerfrequenz der sekundären Trägerfrequenzplatine das Verteilen der Dienstdaten auf alle Arbeitsträgerfrequenzen in einem Zeitschlitz der sekundären Trägerfrequenzplatine vor dem Verteilen der Dienstdaten auf eine Arbeitsträgerfrequenz in einem anderen Zeitschlitz umfasst; und nach dem Vollenden der Verteilung der Dienstdaten die sekundäre Trägerfrequenzplatine in einem inaktiven Zeitschlitz auszuschalten, wobei sich der inaktive Zeitschlitz auf einen Zeitschlitz bezieht, in dem auf alle Trägerfrequenzen einer Trägerfrequenzplatine nicht die Dienstdaten verteilt werden.

## Revendications

1. Procédé de commande d'économie d'énergie pour des ressources d'amplificateur de puissance multiporteuse, comprenant :
la distribution (201) de données de service à une carte de fréquence porteuse principale, et après la distribution des données de service à au moins une fréquence porteuse de travail de la carte de fréquence porteuse principale, la distribution des données de service à au moins une fréquence porteuse de travail d'une carte de fréquence porteuse secondaire, dans lequel la distribution des données de service à l'au moins une fréquence porteuse de travail de la carte de fréquence porteuse secondaire comprend la distribution des données de service à toutes les fréquences porteuses dans une tranche de temps de la carte de fréquence porteuse secondaire avant la distribution des données de service à au moins une fréquence porteuse de travail dans une autre tranche de temps ; et
après la distribution des données de service, la désactivation (202) de la carte de fréquence porteuse secondaire dans une tranche de temps inactive, la tranche de temps inactive se référant à une tranche de temps dans laquelle toutes les fréquences porteuses d'une carte de fréquence porteuse ne sont pas distribuées avec les données de service.

2. Procédé selon la revendication 1, dans lequel la distribution des données de service à la carte de fréquence porteuse principale comprend :
la distribution des données de service à une fréquence porteuse secondaire de la carte de fréquence porteuse principale dans une tranche de temps dans laquelle la carte de fréquence porteuse principale est utilisée pour envoyer une signalisation de commande ; et
après la distribution des données de service à la fréquence porteuse secondaire de la carte de fréquence porteuse principale dans la tranche de temps dans laquelle la carte de fréquence porteuse principale est utilisée pour envoyer la signalisation de commande, la distribution des données de service à une fréquence porteuse de travail de la carte de fréquence porteuse principale dans une tranche de temps dans laquelle la fréquence porteuse principale est utilisée pour envoyer les données de service, la distribution des données de service à la fréquence porteuse de travail de la carte de fréquence porteuse principale dans une tranche de temps dans laquelle la fréquence porteuse principale est utilisée pour envoyer les données de service comprenant la distribution des données de service à toutes les fréquences porteuses dans une tranche de temps dans laquelle la carte de fréquence porteuse principale est utilisée pour envoyer les données de service avant la distribution des données de service à une fréquence porteuse de travail dans une autre tranche de temps.

3. Procédé selon la revendication 2, dans lequel la tranche de temps de la fréquence porteuse principale utilisée pour envoyer la signalisation de commande est une tranche de temps dans laquelle la carte de fréquence porteuse principale ne peut pas être désactivée, et l'autre tranche de temps de la fréquence porteuse principale utilisée pour envoyer les données de service est une tranche de temps dans laquelle la carte de fréquence porteuse principale peut être désactivée.

4. Procédé selon l'une quelconque des revendications 1 à 3, dans lequel, si la capabilité de traitement de la carte de fréquence porteuse principale est supérieure à celle requise pour le traitement des données de service, les données de service sont totalement distribuées à la carte de fréquence porteuse principale, et la carte de fréquence porteuse secondaire est désactivée.

5. Procédé selon la revendication 4, comprenant en outre, après la distribution des données de service, s'il existe une tranche de temps inactive dans laquelle aucune fréquence porteuse n'est distribuée avec les données de service dans les tranches de temps dans lesquelles la carte de fréquence porteuse principale peut être désactivée, la désactivation de la carte de fréquence porteuse principale dans la tranche de temps inactive.

6. Procédé selon la revendication 4, dans lequel, si toutes les données de service sont distribuées à des fréquences porteuses secondaires de la carte de fréquence porteuse principale qui correspondent à la tranche de temps dans laquelle la carte de fréquence porteuse principale ne peut pas être désactivée, la carte de fréquence porteuse principale est désactivée dans une autre tranche de temps dans laquelle la carte de fréquence porteuse principale peut être désactivée.

7. Dispositif de commande d'économie d'énergie pour des ressources d'amplificateur de puissance multiporteuse, comprenant :
une unité de distribution de données, configurée pour : distribuer des données de service à une carte de fréquence porteuse principale, et après la distribution des données de service à au moins une fréquence porteuse de travail de la carte de fréquence porteuse principale, distribuer les données de service à une fréquence porteuse de travail d'une carte de fréquence porteuse secondaire, dans lequel la distribution des données de service à la fréquence porteuse de travail de la carte de fréquence porteuse secondaire comprend la distribution des données de service à toutes les fréquences porteuses dans une tranche de temps de la carte de fréquence porteuse secondaire avant la distribution des données de service à une fréquence porteuse de travail dans une autre tranche de temps ; et
une unité de commande d'économie d'énergie, configurée pour : après la distribution des données de service, désactiver la carte de fréquence porteuse secondaire dans une tranche de temps inactive, la tranche de temps inactive se référant à une tranche de temps dans laquelle toutes les fréquences porteuses d'une carte de fréquence porteuse ne sont pas distribuées avec les données de service.

8. Dispositif selon la revendication 7, dans lequel la distribution, par l'unité de distribution de données, des données de service à la carte de fréquence porteuse principale comprend :
la distribution des données de service à une fréquence porteuse secondaire de la carte de fréquence porteuse principale dans une tranche de temps dans laquelle la carte de fréquence porteuse principale est utilisée pour envoyer une signalisation de commande ; et
après la distribution des données de service à la fréquence porteuse secondaire de la carte de fréquence porteuse principale dans la tranche de temps dans laquelle la carte de fréquence porteuse principale est utilisée pour envoyer la signalisation de commande, distribuer les données de service à une fréquence porteuse de travail de la carte de fréquence porteuse principale dans une tranche de temps dans laquelle la fréquence porteuse principale est utilisée pour envoyer les données de service, la distribution des données de service à la fréquence porteuse de travail de la carte de fréquence porteuse principale dans une tranche de temps dans laquelle la fréquence porteuse principale est utilisée pour envoyer les données de service comprenant la distribution des données de service à toutes les fréquences porteuses dans une tranche de temps dans laquelle la carte de fréquence porteuse principale est utilisée pour envoyer les données de service avant la distribution des données de service à une fréquence porteuse de travail dans une autre tranche de temps.

9. Dispositif selon la revendication 8, dans lequel la tranche de temps de la carte de fréquence porteuse principale utilisée pour envoyer la signalisation de commande est une tranche de temps dans laquelle la carte de fréquence porteuse principale ne peut pas être désactivée, et l'autre tranche de temps de la carte de fréquence porteuse principale utilisée pour envoyer les données de service est une tranche de temps dans laquelle la carte de fréquence porteuse principale peut être désactivée.

10. Dispositif selon l'une quelconque des revendications 7 à 9, dans lequel, si la capabilité de traitement de la carte de fréquence porteuse principale est supérieure à celle requise pour le traitement des données de service, les données de service sont totalement distribuées à la carte de fréquence porteuse principale, et la carte de fréquence porteuse secondaire est désactivée.

11. Dispositif selon la revendication 10, dans lequel, après la distribution des données de service, l'unité de distribution de données est configurée en outre pour : s'il existe une tranche de temps inactive dans laquelle aucune fréquence porteuse n'est distribuée avec les données de service dans les tranches de temps dans lesquelles la carte de fréquence porteuse principale peut être désactivée, désactiver la carte de fréquence porteuse principale dans la tranche de temps inactive.

12. Dispositif selon la revendication 10, dans lequel, si l'unité de distribution de données distribue toutes les données de service à des fréquences porteuses secondaires de la carte de fréquence porteuse principale qui correspondent à la tranche de temps dans laquelle la carte de fréquence porteuse principale ne peut pas être désactivée, la carte de fréquence porteuse principale est désactivée dans une autre tranche de temps dans laquelle la carte de fréquence porteuse principale peut être désactivée.

13. Station de base, comprenant plusieurs secteurs, chaque secteur comprenant un amplificateur de puissance multiporteuse, l'amplificateur de puissance multiporteuse étant configuré pour porter de multiples fréquences porteuses et envoyer un signal de données à un terminal, chaque secteur comprenant un dispositif de commande de ressources d'amplificateur de puissance multiporteuse, le dispositif de commande de ressources d'amplificateur de puissance multiporteuse étant configuré pour : distribuer des données de service à une carte de fréquence porteuse principale, après la distribution des données de service à au moins une fréquence porteuse de travail de la carte de fréquence porteuse principale, distribuer les données de service à une fréquence porteuse de travail d'une carte de fréquence porteuse secondaire, la distribution des données de service à la fréquence porteuse de travail de la carte de fréquence porteuse secondaire comprenant la distribution des données de service à toutes les fréquences porteuses de travail dans une tranche de temps de la carte de fréquence porteuse secondaire avant la distribution des données de service à une fréquence porteuse de travail dans une autre tranche de temps ; et après la distribution des données de service, désactiver la carte de fréquence porteuse secondaire dans une tranche de temps inactive, la tranche de temps inactive se référant à une tranche de temps dans laquelle toutes les fréquences porteuses d'une carte de fréquence porteuse ne sont pas distribuées avec les données de service.
